# FASCICULE DE BREVET EUROPEEN

(11) **EP 3 436 492 B1**
(45) Date de publication et mention de la délivrance du brevet: **03.06.2020**
(21) Numéro de dépôt: 17721769.2
(22) Date de dépôt: 03.04.2017
(51) Int. Cl.: C08G 8/04, C09J 161/06, C09J 161/12, C09J 109/10, C09J 109/08, C08J 5/04, B60C 1/00, D06M 15/41, D06M 15/693, C08J 5/12

(54) **COMPOSITION ADHESIVE AQUEUSE COMPORTANT UNE RESINE THERMODURCISSABLE ET UN LATEX**
WÄSSRIGE HAFTZUSAMMENSETZUNG MIT EINEM WÄRMEHÄRTENDEN HARZ UND EINEM LATEX
AQUEOUS ADHESIVE COMPOSITION COMPRISING A THERMOSETTING RESIN AND A LATEX

(30) Priorité: 01.04.2016 FR 1652893
(43) Date de publication de la demande: 06.02.2019
(73) Titulaire: Compagnie Générale des Etablissements Michelin, 63000 Clermont-Ferrand (FR)
(72) Inventeur: DOISNEAU, David, 63040 CLERMONT FERRAND CEDEX 9 (FR)
(74) Mandataire: Louret, Sylvain
(86) Numéro de dépôt international: PCT/FR2017/050774
(87) Numéro de publication internationale: WO 2017/168107

(56) Documents cités:
- WO-A1-2015/007641
- WO-A1-2015/123781
- JP-B2- 3 361 819
- US-A- 2 776 948
- US-A1- 2008 125 517

## Description

Le domaine de la présente invention est celui des matériaux textiles et des compositions adhésives ou « colles » destinées à faire adhérer de tels matériaux textiles à des matrices de caoutchouc insaturé telles que celles utilisées couramment dans les articles ou produits semi-finis en caoutchouc.

La présente invention est plus particulièrement relative à des matériaux textiles encollés par des couches adhésives à base d'une résine thermodurcissable, notamment à des matériaux textiles encollés susceptibles de renforcer des structures de pneumatiques.

Il est connu de très longue date de faire adhérer des matériaux textiles à des compositions d'élastomère diénique grâce à l'utilisation de colles connues sous la dénomination « RFL » (pour résorcinol-formaldéhyde-latex), par exemple pour le collage de compositions de caoutchouc sur des câblés textiles en polyester ou en polyamide tels que ceux usuellement utilisés dans les pneumatiques (voir par exemple US 2 561 215, US 3 817 778). Ces colles RFL comprennent de manière bien connue une résine phénolique thermodurcissable, obtenue par la condensation du résorcinol avec le formaldéhyde, et un ou plusieurs latex de caoutchouc diénique en solution aqueuse.

L'expérience montre que les colles RFL ci-dessus confèrent une excellente adhésion des matériaux textiles aux compositions de caoutchouc réticulable.

Toutefois, ces colles RFL ne sont pas dépourvues d'inconvénient ; elles comportent en particulier comme substance de base le formaldéhyde (ou formol) qu'il est souhaitable de diminuer, voire de supprimer à terme des compositions adhésives, en raison de l'évolution récente de la réglementation européenne sur ce type de composé.

Ainsi, les concepteurs d'articles en caoutchouc, notamment les manufacturiers de pneumatiques, ont pour objectif aujourd'hui de trouver de nouveaux systèmes adhésifs ou de nouveaux matériaux textiles qui permettent de pallier l'inconvénient précité.

Or, au cours de leurs recherches, les Demanderesses ont découvert une composition adhésive aqueuse n'utilisant pas de formol libre qui permet de répondre à l'objectif ci-dessus.

Dans leur demande WO2013/017421, les Demanderesses ont proposé des compositions adhésives aqueuses comportant d'une part une résine phénol-aldéhyde et d'autre part un latex.

La résine phénol-aldéhyde est à base d'au moins un polyaldéhyde et d'un polyphénol. La présence de deux fonctions aldéhydes sur le polyaldéhyde est une caractéristique essentielle, nécessaire pour assurer un collage suffisant.

Les compositions adhésives qui y sont décrites constituent une alternative forte intéressante à l'emploi des colles RFL conventionnelles.

Toutefois, les résines phénol-aldéhyde qui y sont décrites sont faiblement solubles dans l'eau et nécessitent notamment une forte agitation lors de leur ajout dans la composition aqueuse. Cette forte agitation fait appel à des appareils coûteux et augmente la durée du procédé. Par ailleurs, dans leur demande WO2015/007641, les Demanderesses ont proposé des compositions adhésives aqueuses n'utilisant pas de formaldéhyde comportant une résine phénol-aldéhyde et un latex.

Il existe donc un besoin en d'autres résines thermodurcissables alternatives, qui pourraient efficacement remplacer les colles RFL.

Ainsi, un premier objet de l'invention concerne une composition adhésive aqueuse comportant A) une résine thermodurcissable et B) un latex d'élastomère insaturé, caractérisée en ce que la résine thermodurcissable est à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées et/ou
A2') d'au moins un monophénol aromatique comprenant au moins un noyau aromatique à six chainons portant une unique fonction hydroxyle,
   - les deux positions ortho de la fonction hydroxyle étant non substituées ou
   - au moins une position ortho et la position para de la fonction hydroxyle étant non substituées.

Un autre objet de l'invention concerne une solution adhésive aqueuse comprenant une résine thermodurcissable pré-condensée à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

Un autre objet de l'invention concerne l'utilisation pour le collage d'un matériau textile à un caoutchouc insaturé, et donc réticulable, de la composition adhésive aqueuse selon l'invention, ou de la solution adhésive aqueuse selon l'invention, ainsi qu'un matériau textile dont au moins une partie est revêtue d'une couche adhésive, caractérisé en ce que ladite couche comporte une composition adhésive aqueuse selon l'invention, un matériau textile revêtu obtenu après séchage, et un matériau textile obtenu après réticulation de la résine thermodurcissable.

L'invention concerne également un procédé de fabrication d'un matériau textile revêtu selon l'invention, caractérisé en ce qu'il comporte au moins une étape de revêtement du matériau textile par une composition adhésive conforme à l'invention, puis une étape de chauffage du matériau textile revêtu afin de réticuler la résine thermodurcissable.

L'invention concerne également l'utilisation du matériau textile revêtu de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout composite (article ou produit semi-fini) en caoutchouc, en particulier tout pneumatique, avant comme après cuisson (pour réticulation ou vulcanisation finale), renforcé d'un matériau textile selon l'invention.

L'invention ainsi que ses avantages seront aisément compris à la lumière de la description et des exemples de réalisation qui suivent.

### I - FORMULATION DE LA COMPOSITION ADHESIVE AQUEUSE

Dans la présente description, sauf indication expresse différente, tous les pourcentages (%) indiqués sont des % en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Par "position méta l'une par rapport à l'autre", on entendra que les fonctions visées, par exemple les fonctions hydroxyle dans le polyphénol aromatique, sont portées par des carbones du noyau aromatique séparés l'un de l'autre par un unique autre carbone du noyau aromatique.

Par "position para l'une par rapport à l'autre", on entendra que les fonctions visées sont à l'opposées l'une de l'autre, c'est-à-dire en positions 1 et 4 du noyau aromatique à 6 chaînons. De façon analogue, "la position para" par rapport à une fonction est une position opposée à la fonction sur le noyau aromatique à 6 chaînons portant la fonction.

Par "en position ortho d'une fonction", on entendra la position occupée par le carbone du noyau aromatique immédiatement adjacent au carbone du noyau aromatique portant la fonction. De façon analogue, "la position ortho" par rapport à une fonction est la position adjacente à la fonction sur le noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH₂OH » représente la fonction hydroxyméthyle.

Le « composé A1 » désigne, dans le cadre de l'invention, le composé aromatique défini au paragraphe I.1.

Le « composé A2 » désigne, dans le cadre de l'invention, le composé à base de polyphénol aromatique défini au paragraphe I.2.

Le « composé A'2 » désigne, dans le cadre de l'invention, le composé à base de monophénol aromatique défini au paragraphe I.2.

Par « polyphénol aromatique » on entend un composé aromatique comprenant au moins un noyau benzénique porteur de plus d'une fonction hydroxyle.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, du matériau textile, des composites ou articles finis comportant de tels composites, en particulier au cours d'une étape de cuisson.

La composition adhésive aqueuse selon l'invention comprend donc au moins d'une part A) au moins une (c'est-à-dire une ou plusieurs) résine thermodurcissable selon l'invention et d'autre part B) au moins un (c'est-à-dire un ou plusieurs) latex d'élastomère insaturé ; cette résine thermodurcissable est quant à elle à base d'au moins un (c'est-à-dire un ou plusieurs) composé aromatique et au moins un (c'est-à-dire un ou plusieurs) polyphénol aromatique, constituants qui vont être décrits en détail ci-après.

### 1.1 - Composé aromatique A1

Le premier constituant essentiel de la résine thermodurcissable est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle et aldéhyde. Le composé selon l'invention répond donc à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé est de formule générale (II) : 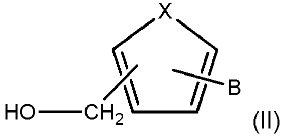 dans laquelle B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé est de formule générale (II') : 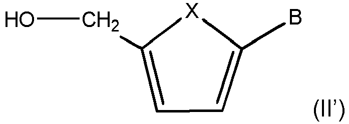 dans laquelle X, B sont tels que définis précédemment.

Dans un mode de réalisation particulièrement avantageux, B représente CHO. Dans un autre mode de réalisation, B représente CH₂OH.

Selon un mode de réalisation préférentiel, X représente O.

Dans une variante, le composé est de formule (IIa) : 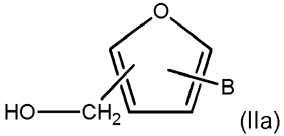 B étant tel que défini précédemment
et plus particulièrement de formule (II'a1) ou (II'a2) :

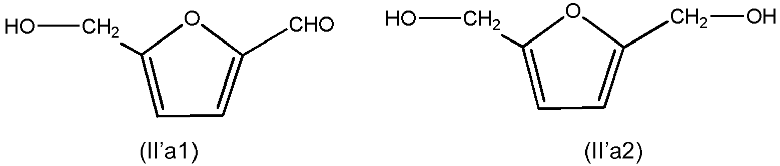

Le 5-(hydroxyméthyl)-furfural (II'a1 ) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans un autre mode de réalisation, X représente NR₁ ou NO, avantageusement NR₁. R₁ est tel que défini précédemment.

Dans une variante, le composé est de formule (IIb) : 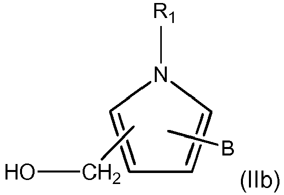 B étant tel que défini précédemment
et plus particulièrement de formule (II'b1) ou (II'b2) : 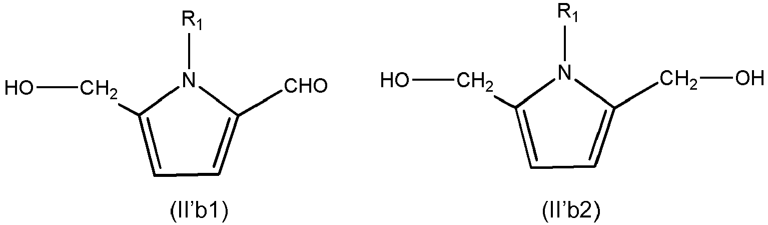 dans lesquelles R₁ représente un hydrogène, un groupe alkyle, aryle, arylalkyle, alkylaryle ou cycloalkyle. Avantageusement R₁ représente un hydrogène ou un groupe alkyle en C₁-C₆.

Dans un autre mode de réalisation, X représente S, SO, SO₂ ou SR₂R₃.

Dans une variante, le composé est de formule (IIc) :
B étant tel que défini précédemment 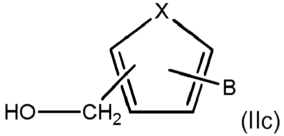 avec X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (II'c1) ou (II'c2) : 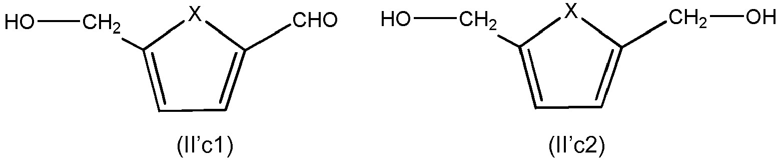 dans laquelle X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

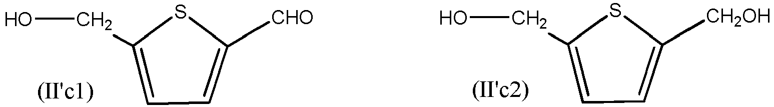

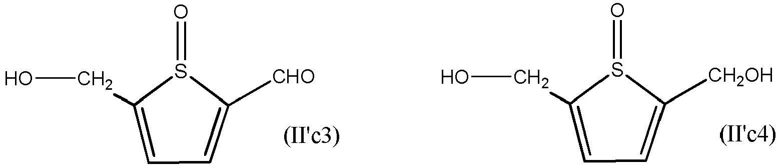

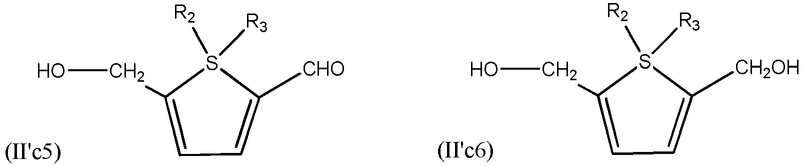

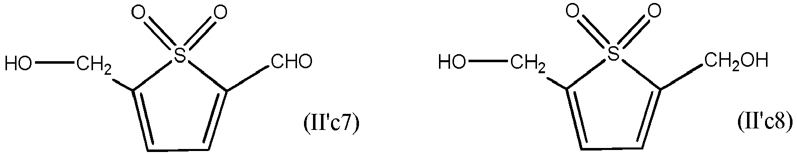

Avantageusement R₂, R₃ représentent chacun, l'un indépendamment de l'autre, un radical alkyle en C₁-C₆.

Le composé est avantageusement de formule (II'c1) ou (II'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé est de formule générale (III) : 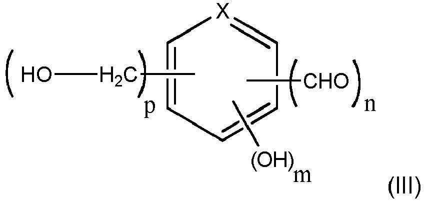 dans laquelle X représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Conformément à l'invention, p+n>1 avec p>0.

Avantageusement R₁ représente un hydrogène ou un groupe alkyle en C₁₋C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique de l'aldéhyde est un noyau benzénique. Plus préférentiellement, cet aldéhyde est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1 -carboxaldéhyde, le 3-hydroxymethyl-6-hydroxy-benzène-1 - carboxaldéhyde, le 3-hydroxymethyl-4-hydroxy-benzène-1-carboxaldéhyde, le 3-hydroxymethyl-2-hydroxy-benzène-1 -carboxaldéhyde, le 3-hydroxymethyl-2-hydroxybenzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxybenzène, le 1,3,5-hydroxymethyl-2-hydroxy-benzène, le 1,3-hydroxymethyl-6-hydroxybenzène, le 1,3,5-hydroxymethyl-4-hydroxy-benzène, le 1,3,2-hydroxymethyl-2-hydroxybenzène et les mélanges de ces composés.

Encore plus préférentiellement le composé aromatique utilisé est le 1-hydroxymethyl-benzène-4-carboxaldéhyde de formule (IIIa) ou le 1,4-hydroxymethyl-benzène de formule (IIIb) :

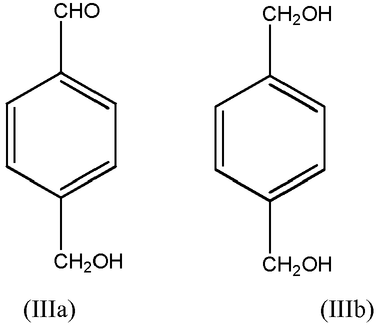

De préférence, lorsque la résine thermodurcissable est à base de polyphénol et d'un ou plusieurs composés de formule **(I),** la composition est dépourvue de formaldéhyde.

Lorsque la résine thermodurcissable est à base de polyphénol, d'un ou plusieurs composés de formule (I) et d'aldéhydes, chaque aldéhyde est préférentiellement différent du formaldéhyde. La composition est alors également dépourvue de formaldéhyde.

En d'autres termes et de manière préférée, lorsqu'un aldéhyde est présent, le ou chaque aldéhyde de la résine thermodurcissable est différent du formaldéhyde.

Par dépourvue de formaldéhyde, on entend que le taux massique de formaldéhyde en poids total du ou des aldéhydes est inférieur ou égal à 10%, de préférence à 5% et plus préférentiellement à 2%, ces pourcentages correspondant à des traces susceptibles d'être présentes dans le ou les aldéhydes utilisés industriellement.

### I.2 - Polyphénol aromatique et/ou monophénol aromatique - composés A2 et/ou A2'

Dans un mode de réalisation, le deuxième constituant essentiel de la résine thermodurcissable est un polyphénol aromatique A2 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le deuxième constituant essentiel de la résine thermodurcissable est un monophénol aromatique A2' comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées.

Dans encore un autre mode de réalisation, le deuxième constituant essentiel est un mélange du polyphénol aromatique A2 et du monophénol aromatique A2' tels que décrits ci-dessus.

Conformément à l'invention, le composé A2) peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le composé A2') peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le composé A2) peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le composé A2') peut être, dans un autre mode de réalisation, une résine pré-condensée à base :
- d'au moins un monophénol aromatique comprenant au moins un noyau aromatique à six chainons portant une unique fonction hydroxyle :
   - les deux positions ortho de la fonction hydroxyle sont non substituées, ou
   - au moins une position ortho et la position para de la fonction hydroxyle sont non substituées;
- d'au moins un composé susceptible de réagir avec ledit monophénol aromatique comprenant au moins une fonction aldéhyde et/ou au moins un composé susceptible de réagir avec ledit monophénol aromatique comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le composé A2) et/ou A2') est un mélange d'un polyphénol aromatique formant une molécule simple et d'une résine pré-condensée à base de polyphénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A2

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le noyau aromatique porteur d'au moins deux fonctions hydroxyle en position méta l'une par rapport à l'autre, les deux positions ortho d'au moins une des fonctions hydroxyle étant non substituées, est un noyau benzénique.

Avantageusement, chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V):

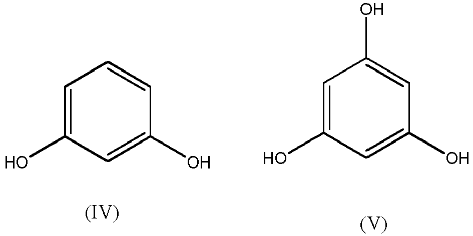

A titres d'exemples, dans le cas où le polyphénol aromatique comporte plusieurs noyaux aromatiques, au moins deux de ces noyaux aromatiques, identiques ou différents, sont choisis parmi ceux de formules générales : 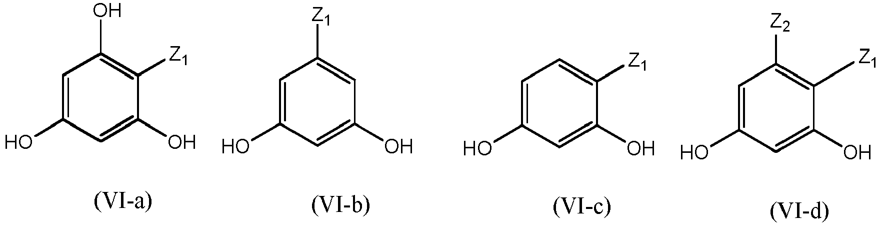 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

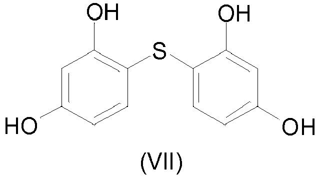

Un autre exemple de polyphénol aromatique est le 2,2',4,4'-tétrahydroxydiphényl benzophénone de formule développée suivante (VIII) :

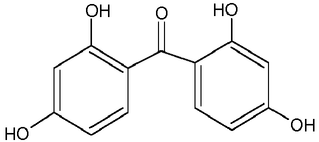

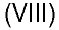

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le composé A2) comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et leurs mélanges ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

Le composé susceptible de réagir avec ledit polyphénol aromatique peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le composé A2) peut également comprendre un mélange d'une molécule libre de polyphénol aromatique et d'une résine pré-condensée à base de polyphénol aromatique, telle que décrite précédemment. En particulier, le composé A2) peut également comprendre un mélange de phloroglucinol et d'une résine pré-condensée à base de phloroglucinol.

### Monophénol aromatique A2'

Le monophénol A2' peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le composé A2') comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec ledit monophénol aromatique comprenant au moins une fonction aldéhyde et/ou au moins un composé susceptible de réagir avec ledit monophénol aromatique comprenant au moins deux fonctions hydroxyméthyle portées par un noyau aromatique.

Le composé susceptible de réagir avec ledit monophénol aromatique peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le composé A2') peut également comprendre un mélange d'une molécule libre de monophénol aromatique et d'une résine pré-condensée à base de monophénol aromatique, telle que décrite précédemment. En particulier, le composé A2') peut également comprendre un mélange de phénol et d'une résine pré-condensée à base de phénol.

### I.3 - Latex d'élastomère insaturé

On rappelle qu'un latex est une dispersion stable de microparticules d'élastomère(s) en suspension dans une solution généralement aqueuse. Un latex d'élastomère est donc une composition dans un état liquide comprenant un solvant liquide, généralement de l'eau, et au moins un élastomère ou un caoutchouc dispersé dans le solvant liquide de façon à former une émulsion. Ainsi, le latex n'est pas une composition de caoutchouc qui comprend une matrice d'élastomère ou de caoutchouc dans laquelle est dispersé au moins un autre composant. Une composition de caoutchouc est dans un état plastique à l'état cru (non-réticulé) et dans un état élastique à l'état cuit (réticulé) mais en aucun cas dans un état liquide comme l'est un latex.

Les latex d'élastomère insaturé (c'est-à-dire porteur de doubles liaisons carbone-carbone), notamment d'élastomère diénique, sont bien connus de l'homme du métier. Ils constituent notamment la base élastomérique des colles RFL décrites en introduction du présent mémoire.

Conformément à l'invention, l'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

### 1.4 - Solution adhésive aqueuse comprenant une résine pré-condensée de l'invention

L'invention a également pour objet une solution adhésive aqueuse comprenant une résine pré-condensée à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

Avantageusement, la résine pré-condensée est également à base :
A2') d'au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées.

Le composé aromatique est tel que décrit précédemment, en particulier il s'agit d'un composé de formule (I) telle que définie précédemment.

Le polyphénol aromatique et/ou le monophénol aromatique est tel que décrit précédemment, en particulier il s'agit préférentiellement d'un polyphénol aromatique et/ou d'un monophénol aromatique qui est une molécule simple.

On définit N1 comme le nombre de sites réactifs du composé aromatique comme suit : une fonction aldéhyde représente deux sites réactifs et une fonction hydroxyméthyle représente un site réactif. Ainsi, par exemple, le 5-(hydroxyméthyl)-furfural a N1=3 sites réactifs et le 2,5-di(hydroxyméthyle)furane a N1=2 sites réactifs.

Dans le cas d'un polyphénol aromatique, on définit N2 comme le nombre de sites réactifs du polyphénol aromatique comme suit : chaque carbone libre du noyau aromatique adjacent à une fonction hydroxyle portée par le noyau aromatique représente un site réactif, chaque carbone libre ne pouvant être compté en tant que site réactif que pour une seule fonction hydroxyle adjacente. Ainsi, par exemple, le résorcinol et le phloroglucinol ont chacun N2=3 sites réactifs et le 2,2',4,4'-tétrahydroxydiphényl sulfide a N2=4 sites réactifs.

Dans le cas d'un monophénol aromatique, on définit N'2 comme le nombre de sites réactifs du monophénol aromatique comme suit : chaque carbone libre du noyau aromatique à six chainons adjacent à la fonction hydroxyle portée par le noyau aromatique représente un site réactif et le carbone libre du noyau aromatique à six chainons positionné en para de la fonction hydroxyle représente un site réactif. Ainsi, par exemple, le phénol a N'2=3 sites réactifs.

La résine pré-condensée est obtenue par mélangeage :
- du composé aromatique A1), et
- du polyphénol aromatique A2), et optionnellement
- du monophénol aromatique A2'),
dans un solvant basique ayant de préférence un pH compris entre 8 et 13, plus préférentiellement entre 9 et 12 ou dans un solvant acide ou neutre ayant de préférence un pH compris entre 4 et 7, plus préférentiellement entre 5 et 7.

La résine pré-condensée est avantageusement préparée en mélangeant progressivement le polyphénol aromatique et optionnellement le monophénol aromatique, et le composé aromatique A1 dans une solution aqueuse.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Dans la première variante, on ajoute ensuite avantageusement un acide de façon à neutraliser la base et à obtenir une résine pré-condensée pouvant être stockée et utilisée ultérieurement.

Dans la deuxième variante, on ajoute ensuite avantageusement une base de façon à neutraliser l'acide et à obtenir une résine pré-condensée pouvant être stockée et utilisée ultérieurement.

Afin de préparer la résine pré-condensée, la quantité molaire n2 de polyphénol aromatique A2, la quantité molaire n'2 de monophénol aromatique A2' et la quantité molaire n1 du composé aromatique A1 sont telles que [(n2*N2)+(n'2N'2)]/(n1*N1)>1, de préférence 1<[(n2*N2)+)+(n'2N'2)]/(n1*N1)<5.

La résine pré-condensée est ensuite généralement diluée dans l'eau.

Dans la solution adhésive aqueuse finale ainsi préparée, le taux d'extrait sec de résine pré-condensée selon l'invention représente de préférence entre 2 et 30 % en poids, plus préférentiellement entre 5 et 15 % en poids.

La teneur en eau de la solution adhésive aqueuse finale ainsi préparée est de préférence comprise entre 70 et 98 % en poids, plus préférentiellement entre 85 et 95 % en poids.

Par teneur en eau de la solution adhésive aqueuse, on entend le poids en eau par rapport au poids total de la solution adhésive.

### I.5 Additifs - Fabrication de la composition adhésive aqueuse

La composition adhésive aqueuse conforme à l'invention peut bien entendu comporter tout ou partie des additifs habituels pour compositions adhésives aqueuses telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants, et des épaississants, par exemple la carboxyméthylecellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Typiquement, lors d'une première étape de résinification, on mélange, avantageusement dans l'eau, les constituants de la résine thermodurcissable elle-même.

Cette première étape de résinification peut être réalisée selon plusieurs modes de réalisations.

Avant de décrire en détail les différents modes de réalisation, on précisera tout d'abord que la résine thermodurcissable de la composition adhésive aqueuse peut être obtenue par mélange des constituant de la résine, c'est-à-dire dudit composé aromatique A1) tel que défini précédemment, dudit composé aromatique A2) tel que défini précédemment et/ou dudit composé aromatique A2') tel que défini précédemment dans un solvant soit basique, ayant de préférence un pH compris entre 8 et 13, plus préférentiellement entre 9 et 12, soit acide ou neutre, ayant de préférence un pH compris entre 4 et 7, plus préférentiellement entre 5 et 7. Ce solvant est avantageusement de l'eau rendue basique par ajout d'une base ou rendue acide par ajout d'un acide.

Dans un premier mode de réalisation, on utilise une résine pré-condensée à base de polyphénol aromatique telle que définie au paragraphe I.2, c'est-à-dire issue à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

La résine pré-condensée à base de polyphénol aromatique A2 est avantageusement préparée en mélangeant progressivement le polyphénol aromatique et le composé comprenant au moins une fonction aldéhyde et/ou le composé comprenant au moins deux fonctions hydroxyméthyle portées par un noyau aromatique, par exemple le formaldéhyde, dans des quantités molaires telles que décrites précédemment.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Ainsi, la résine pré-condensée est obtenue par mélangeage :
- dudit polyphénol aromatique, et
- dudit composé susceptible de réagir avec ledit polyphénol aromatique,
dans un solvant basique ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Ainsi, la résine pré-condensée est obtenue par mélangeage :
- dudit polyphénol aromatique, et
- dudit composé susceptible de réagir avec ledit polyphénol aromatique,
dans un solvant acide ou neutre ayant de préférence un pH compris entre 4 et 7, plus préférentiellement entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement.

Puis, dans ce premier mode de réalisation, la composition adhésive peut être obtenue par mélangeage :
- de cette résine pré-condensée (composé A2), et
- du composé aromatique A1,
dans un solvant basique ayant de préférence un pH compris entre 8 et 13, plus préférentiellement entre 9 et 12 ou dans un solvant acide ou neutre ayant de préférence un pH compris entre 4 et 7, plus préférentiellement entre 5 et 7.

En particulier, on mélange progressivement cette résine pré-condensée à base de polyphénol aromatique (composé A2), et le composé aromatique A1 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7. Que ce soit en milieu acide ou basique, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C. L'homme du métier saura ajuster les quantités molaires de résine pré-condensée à base de polyphénol aromatique A2 et du composé aromatique A1 afin d'obtenir une réticulation et une concentration adaptées à l'usage recherché, notamment en fonction de la nature de la résine pré-condensée à base de polyphénol aromatique A2.

Dans un deuxième mode de réalisation, on utilise une résine pré-condensée telle que décrite au paragraphe I-4, c'est-à-dire à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique, par exemple le 5-(hydroxyméthyl)-furfural et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, par exemple le phloroglucinol.

Dans ce deuxième mode de réalisation, la résine pré-condensée à base de polyphénol aromatique conforme à l'invention est préparée dans des conditions analogues à la résine pré-condensée à base de polyphénol aromatique du premier mode de réalisation. Puis, on mélange progressivement cette résine pré-condensée à base de polyphénol aromatique selon l'invention A2 et le composé aromatique A1 dans des conditions analogues à celles du premier mode de réalisation. Là encore, l'homme du métier saura ajuster les quantités molaires de résine pré-condensée à base de polyphénol aromatique A2 et du composé aromatique A1 afin d'obtenir une réticulation et une concentration adaptées à l'usage recherché, notamment en fonction de la nature de la résine pré-condensée à base de polyphénol aromatique A2.

Dans un troisième mode de réalisation, on utilise un polyphénol aromatique A2 selon l'invention sous forme d'une molécule simple, par exemple du phloroglucinol.

Dans une première variante, la résine thermodurcissable est obtenue par :
- mélangeage du polyphénol aromatique A2) sous forme d'une molécule simple dans un solvant basique ayant de préférence un pH compris entre 8 et 13, plus préférentiellement entre 9 et 12 ou dans un solvant acide ou neutre ayant de préférence un pH compris entre 4 et 7, plus préférentiellement entre 5 et 7,
- puis ajout du composé aromatique A1).

En particulier, on mélange tout d'abord le polyphénol aromatique A2 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation du polyphénol aromatique A2.

Puis, on ajoute le composé aromatique A1). En particulier, on ajoute progressivement le composé aromatique A1 dans des conditions analogues à celles du premier mode de réalisation.

Dans une deuxième variante, la résine thermodurcissable est obtenue par :
- mélangeage du composé aromatique A1) dans un solvant basique ayant de préférence un pH compris entre 8 et 13, plus préférentiellement entre 9 et 12 ou dans un solvant acide ou neutre ayant de préférence un pH compris entre 4 et 7, plus préférentiellement entre 5 et 7,
- puis ajout du polyphénol aromatique A2) sous forme d'une molécule simple.

En particulier, on mélange tout d'abord le composé aromatique A1 dans une solution aqueuse, de préférence dans un solvant basique tel qu'une solution aqueuse de soude, ayant de préférence un pH compris entre 8 et 13, plus préférentiellement entre 9 et 12. Puis, on ajoute le polyphénol aromatique A2 et on mélange les composants dans des conditions analogues à celles du premier mode de réalisation.

On mélange une quantité molaire n2 de polyphénol aromatique A2 et une quantité molaire n1 du composé aromatique A1 telles que 0,3≤(n2*N2)/(n1*N1)≤3 et de préférence 1<n2*N2)/(n1*N1)≤2.

Dans chacun des trois modes de réalisation précédents, on pourrait remplacer le polyphénol aromatique, en totalité ou en partie, par un monophénol aromatique comprenant au moins un noyau aromatique à six chainons portant une unique fonction hydroxyle, les deux positions ortho de la fonction hydroxyle étant non substituées, ou au moins une position ortho et la position para de la fonction hydroxyle étant non substituées.

Dans ce cas, dans le troisième mode de réalisation décrit ci-dessus dans lequel on utilise des composés sous forme de molécules simples, on mélangerait alors une quantité molaire n2 de polyphénol aromatique A2 et/ou une quantité molaire n'2 de monophénol aromatique A2' et une quantité molaire n1 du composé aromatique A1 telle que 0,3≤[(n2*N2)+ (n'2*N'2)]/(n1*N1)≤3 et de préférence 1 <[(n2*N2)+ (n'2*N'2)]/(n1*N1)≤2.

Dans l'un quelconque de ces trois modes de réalisation, la résine thermodurcissable partiellement réticulée est généralement diluée dans l'eau, avant d'être ajoutée au latex ou aux latex (s'ils sont plusieurs) d'élastomère(s) insaturé(s) pour constituer la composition adhésive aqueuse de l'invention, selon un mode opératoire général qui est bien connu de l'homme du métier dans le domaine des colles RFL.

De préférence, lors de cette étape de constitution de la composition adhésive aqueuse, on fera en sorte que la composition adhésive aqueuse présente un pH compris entre 8 et 13, plus préférentiellement entre 9 et 12 de façon à limiter l'éventuelle précipitation du ou de certains latex d'élastomère(s) insaturé(s).

Ainsi, dans le cas où, lors de l'étape de résinification précédent cette étape de constitution de la composition adhésive aqueuse, on a utilisé un solvant acide ou neutre ou un solvant basique qui a été neutralisé, on ajoutera une base permettant d'obtenir un pH compris entre 8 et 13, plus préférentiellement entre 9 et 12 préalablement à l'ajout du ou des latex d'élastomère(s) insaturé(s) de façon à limiter l'éventuelle précipitation du ou de certains latex d'élastomère(s) insaturé(s).

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine thermodurcissable partiellement réticulée (diluée). L'ensemble est mélangé sous agitation pendant 1 à 30 min, par exemple à 20°C.

Lors d'une dernière étape de fabrication, dite de maturation, la composition adhésive aqueuse est généralement stockée à température ambiante (23°C) pendant un temps de maturation pouvant varier typiquement de 1 à plusieurs heures voire plusieurs jours, avant son utilisation finale.

La composition adhésive finale ainsi préparée présente un taux d'extrait sec total, avantageusement un taux d'extrait sec de résine thermodurcissable et de latex, entre 5 et 60 %, plus préférentiellement entre 10 et 40 % en poids.

Dans un premier mode de réalisation, le taux d'extrait sec total, avantageusement le taux d'extrait sec de résine thermodurcissable et de latex, est compris plus préférentiellement entre 10 et 30% en poids.

Dans un deuxième mode de réalisation, le taux d'extrait sec total, avantageusement le taux d'extrait sec de résine thermodurcissable et de latex, est compris plus préférentiellement entre 15 et 40% en poids.

Par taux d'extrait sec total de la composition adhésive, on entend le rapport entre la masse de résidu obtenue après séchage de la composition adhésive aqueuse sur la masse de la composition adhésive aqueuse avant séchage.

Par taux d'extrait sec de la résine thermodurcissable et de latex, on entend le rapport entre la masse de la résine thermodurcissable et de latex obtenue après séchage de la composition adhésive aqueuse sur la masse de la composition adhésive aqueuse avant séchage.

Ces deux taux d'extrait sec sont mesurés conformément à la norme NF EN 827 (mars 2006).

Le taux d'élastomère insaturé (c'est-à-dire l'extrait sec du ou des latex) est quant à lui compris de préférence entre 40 et 95 %, plus préférentiellement entre 70 et 90 %, en poids de l'extrait sec de la composition adhésive.

Le rapport pondéral de l'extrait sec de résine sur l'extrait sec de latex est de préférence compris entre 0,1 et 2,0, plus préférentiellement entre 0,15 et 1,0.

La teneur en eau de la composition adhésive aqueuse de l'invention est de préférence comprise entre 60 et 90 % en poids, plus préférentiellement entre 60 et 85 % en poids.

Par teneur en eau de la composition adhésive aqueuse, on entend le poids en eau par rapport au poids total de la composition adhésive.

### II - MATERIAU TEXTILE ET COMPOSITE DE L'INVENTION

Comme indiqué précédemment, la présente invention concerne également l'utilisation de la composition adhésive aqueuse précédemment décrite pour le collage de tout matériau textile à une composition de caoutchouc insaturé, pour formation d'un composite de caoutchouc renforcé d'un tel matériau, ainsi que, en tant que tel, le matériau textile dont au moins une partie est revêtue d'une composition adhésive selon l'invention.

### 11.1 - Définitions ; exemples de matériaux textiles

Par définition, dans la présente demande, on entend par « textile » ou « matériau textile », de manière bien connue de l'homme du métier, tout matériau en matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre, un ruban ou film, ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les films, les monofilaments (ou fils unitaires), les fibres multifilamentaires, les assemblages de tels fils ou fibres, et les assemblages de tels matériaux. Il s'agit plus particulièrement d'un monofilament, d'une fibre multifilamentaire ou d'un retors.

Par « fil » ou « fibre », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut d'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Par « film » ou « ruban », on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

La composition adhésive aqueuse de l'invention peut être appliquée à tout matériau textile tel que décrit ci-dessus et susceptible de renforcer des articles en caoutchouc tels que des pneumatiques, incluant les matériaux textiles en matière organique ou polymérique, comme en matière inorganique.

A titre d'exemples de matières inorganiques, on citera le verre, le carbone.

L'invention est préférentiellement mise en oeuvre avec des matériaux en matière polymérique, du type thermoplastique comme non thermoplastique.

A titre d'exemples de matières polymériques du type non thermoplastiques, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate), PEF (polyéthylène furanoate), PBF (polybutylène furanoate), PPF (polypropylène furanoate).

De façon préférée, la matière du matériau textile est choisie dans le groupe constitué par les polyesters, les polyamides, les polycétones, les alcools polyvinyliques, les celluloses et les associations de ces matériaux.

Plus préférentiellement, la matière du matériau textile est choisie dans le groupe constitué par les polyesters, les polyamides aliphatiques et les polyamides aromatiques et les associations de ces matériaux.

### II.2 - Fabrication du matériau textile et du composite

Le matériau textile revêtu de l'invention peut être préparé selon un procédé de fabrication, généralement appelé procédé d'encollage, caractérisé en ce qu'il comporte au moins une étape de revêtement du matériau textile de départ (initial) par une composition adhésive conforme à l'invention.

L'étape de dépôt de la composition adhésive sur le matériau textile initial (matériau textile de départ) peut être réalisée selon toute méthode appropriée, notamment par toute technique d'enduction connue telle que par exemple pulvérisation, imprégnation par trempage, défilement dans un bain ou autre technique équivalente de dépôt de film de colle mince ou ultra-mince, ou encore par une combinaison d'une ou plusieurs de ces techniques.

Lors de l'imprégnation par trempage dans un bain ou défilement dans un bain, ledit bain est avantageusement à température ambiante, c'est-à-dire de 18°C à 25°C.

Le poids d'extrait sec de la composition adhésive aqueuse déposée sur un kilogramme de matériau textile est de préférence compris entre 5 et 100 g, plus préférentiellement entre 30 et 70 g, encore plus préférentiellement entre 40 et 60 g.

L'invention s'applique également aux cas où le matériau textile de départ a été pré-adhérisé par un primaire d'adhésion tel que ceux couramment utilisés par l'homme du métier pour le pré-encollage de certaines fibres textiles (e.g. fibres en PET ou en aramide). Les fibres ainsi pré-adhérisées subissent ensuite un encollage ultérieur et définitif avec la composition adhésive aqueuse selon l'invention.

Après l'étape précédemment décrite de dépôt de la composition adhésive, le matériau encollé subit un premier traitement thermique visant à éliminer tout solvant ou eau, à une température comprise de préférence entre 110°C et 260°C, plus préférentiellement entre 130°C et 250°C, par exemple par traversée d'un four-tunnel, typiquement de plusieurs mètres de long, tels que ceux utilisés couramment pour le traitement thermique après encollage des matériaux textiles par une colle RFL.

L'invention concerne ainsi le matériau textile revêtu obtenu après séchage, c'est-à-dire après un traitement thermique visant à éliminer l'eau, du matériau textile selon l'invention dont au moins une partie est revêtue d'une couche adhésive comportant une composition adhésive selon l'invention.

Puis, le matériau anhydre ainsi obtenu subit un second traitement thermique durant lequel on chauffe du matériau textile revêtu anhydre afin terminer la réticulation de la résine thermodurcissable, préférentiellement conduit à l'air dans un four tunnel tel que décrit ci-dessus. La température de traitement est de préférence comprise entre 150°C et 350°C. Les durées de traitement sont de quelques secondes à quelques minutes selon les cas (par exemple entre 10 s et 10 min).

L'invention concerne ainsi le matériau textile revêtu obtenu après réticulation de la résine thermodurcissable, c'est-à-dire après un traitement thermique visant à terminer la réticulation de la résine thermodurcissable.

L'homme du métier saura ajuster, le cas échéant, la température et la durée du traitement thermique ci-dessus, en fonction des conditions particulières de mise en oeuvre de l'invention, notamment de la nature exacte du matériau textile fabriqué, en particulier selon que l'on traite des monofilaments, des fibres multifilamentaires, des retors constitués de plusieurs fibres retordues ensemble, ou des films. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Ainsi encollé, le matériau textile revêtu de l'invention est préférentiellement destiné à adhérer à une composition de caoutchouc insaturé tel qu'un caoutchouc diénique, pour former un composite de caoutchouc renforcé qui constitue un autre objet de l'invention.

Ce composite de caoutchouc de l'invention peut être préparé selon un procédé comportant au moins les étapes suivantes :
- au cours d'une première étape, combiner au moins une portion du matériau textile selon l'invention avec une composition de caoutchouc insaturé (réticulable), pour former un composite de caoutchouc renforcé du matériau textile ;
- puis, au cours d'une deuxième étape, réticuler par cuisson, de préférence sous pression, le composite ainsi formé.

L'invention s'applique donc à tout type de composite de caoutchouc susceptible d'être obtenu par le procédé précédemment décrit, comportant au moins une matrice en composition de caoutchouc réticulable, notamment de caoutchouc diénique, liée au matériau textile via une interphase adhésive à base de la composition adhésive selon l'invention.

L'élastomère diénique du composite est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

### II.3 - Application en pneumatiques

Le matériau textile de l'invention est avantageusement utilisable pour le renforcement de pneumatiques de tous types de véhicules, en particulier véhicules tourisme ou véhicules industriels tels que Poids-lourd.

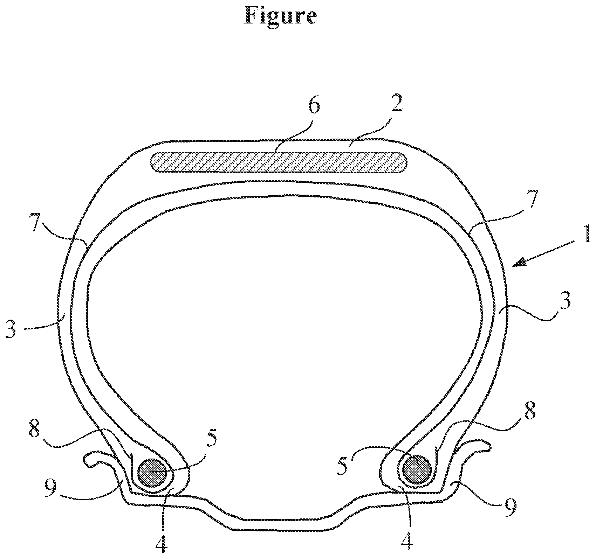

A titre d'exemple, la figure unique annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet (6) et/ou son armature de carcasse (7) comporte un matériau textile selon l'invention. Selon un autre exemple de mode de réalisation possible de l'invention, ce sont par exemple les tringles (5) qui pourraient être constituées, en tout ou partie, d'un matériau textile selon l'invention.

Bien entendu, l'invention concerne les objets précédemment décrits, à savoir le matériau textile et le composite en caoutchouc tel que pneumatique le comportant, tant à l'état cru (avant cuisson ou vulcanisation) qu'à l'état cuit (après cuisson).

### III - EXEMPLES DE REALISATION DE L'INVENTION ET TESTS COMPARATIFS

Ces essais démontrent que l'adhésion à une composition d'élastomère diénique, de câblés textiles encollés avec une composition adhésive aqueuse selon l'invention, est équivalente voire même améliorée dans certains cas, par rapport à des câblés encollés avec une composition adhésive conventionnelle du type RFL.

Ces essais démontrent également que le procédé de solubilisation de la composition adhésive selon l'invention dans l'eau par rapport aux compositions adhésives décrites dans le document WO2013/017421 est également largement facilité.

Ces essais démontrent enfin que la mouillabilité des câblés textiles est équivalente voire améliorée par rapport à composition adhésive conventionnelle du type RFL et améliorée par rapport aux compositions adhésives décrites dans le document WO2013/017421.

Pour cela, huit compositions adhésives aqueuses ont été préparées comme indiqué précédemment, trois conformément à l'invention (notées ci-après C-1, C-2 et C-3) et cinq non conformément à l'invention (composition témoin notée ci-après T-1 à T-5). Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive aqueuse (c'est-à-dire les constituants plus l'eau).

La composition adhésive T-1 est une composition témoin, de type RFL, couramment utilisée pour l'adhésion de câblés polyamide à une composition de caoutchouc. Cette composition adhésive est à base de résorcinol et de formol.

La composition adhésive T-2 est une composition témoin, de type RFL, couramment utilisée pour l'adhésion de câblés polyamide à une composition de caoutchouc. Cette composition adhésive est à base d'une résine pré-condensée résorcinol-formaldéhyde et de formol.

La composition adhésive T-3 est une composition témoin, de type phénol-aldéhyde, telle que décrite dans la demande WO2013/017421. Cette composition adhésive est à base de phloroglucinol et de téréphtaldéhyde.

La composition adhésive T-4 est une composition témoin, de type phénol-aldéhyde, telle que décrite dans la demande WO2013/017421. Cette composition adhésive est à base d'une résine pré-condensée résorcinol-formaldéhyde et de téréphtaldéhyde.

La composition adhésive T-5 est une composition témoin, de type phénol-aldéhyde, telle que décrite dans la demande WO2015/007641. Cette composition adhésive est à base de phloroglucinol et de furfuraldéhyde.

La composition adhésive aqueuse C-1 selon l'invention est à base de phloroglucinol et de 5-(hydroxyméthyl)-furfural.

La composition adhésive aqueuse C-2 selon l'invention est à base d'une résine pré-condensée résorcinol-formaldéhyde et de 5-(hydroxyméthyl)-furfural.

La composition adhésive aqueuse C-3 selon l'invention est à base de 1,3-benzènedimethylol et de phloroglucinol.

Ces compositions adhésives C-1 à C-3, T-1 à T-5 sont par ailleurs toutes à base de latex de caoutchouc naturel (NR), latex de copolymère styrène-butadiène (SBR) et de latex de vynilpyridine-styrène-butadiène (VPSBR).

### TEST D'ADHESION

Les câblés en polyamide (polyamide-6,6 ou nylon-6,6) consistent en des retors à deux brins de construction 140x2 (titre de chaque brin égal à 140 tex) et 250/250 (torsion en t/m) ; ils ont été encollés avec chacune de ces 6 compositions adhésives aqueuses C-1 à C-3, T-1 à T-5, puis séchés dans un four de séchage à 180°C pendant 60s. Puis la composition adhésive a été réticulée par passage des câblés textiles dans un four de traitement à 230°C pendant 60 s. Puis l'ensemble a été solidarisé par cuisson à une composition de caoutchouc naturel, grâce à un traitement thermique de vulcanisation, pour former des éprouvettes de composites comme décrit ci-après.

La qualité de la liaison entre la composition de caoutchouc et le matériau textile est ensuite déterminée par un test dans lequel on mesure la force nécessaire pour extraire des tronçons de câblés en matière textile, de la composition de caoutchouc vulcanisée. Cette composition de caoutchouc est une composition conventionnelle utilisable pour le calandrage de nappes textiles d'armature carcasse de pneumatique, à base de caoutchouc naturel, de noir de carbone et des additifs usuels.

Plus précisément, le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les câblés textiles (15 tronçons au total) sont emprisonnés entre les deux plaques de caoutchouc à l'état cru, à égale distance et en laissant dépasser de part et d'autre de ces plaques une extrémité de câblé de longueur suffisante pour la traction ultérieure. Le bloc comportant les câblés est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min.

A l'issue de la cuisson, l'éprouvette ainsi constituée du bloc vulcanisé et des 15 tronçons de câblés est mise en place dans les mâchoires d'une machine de traction adaptée pour permettre de tester chaque tronçon isolément, à une vitesse et une température données (par exemple, dans le cas présent, à 100 mm/min et 20°C).

On caractérise les niveaux d'adhésion en mesurant la force dite d'arrachage (notée Fₘₐₓ) pour arracher les renforts de l'éprouvette. Une valeur supérieure à celle de l'éprouvette témoin, arbitrairement fixée à 100, indique un résultat amélioré, c'est-à-dire une force d'arrachage supérieure à celle de l'éprouvette témoin. Les résultats des tests d'adhésion effectués sur les éprouvettes sont résumés dans le tableau 1.

On constate que les câblés textiles encollés avec les compositions adhésives C-1 à C-3 selon l'invention présentent une force d'arrachage Fₘₐₓ particulièrement élevée et inattendue pour l'homme du métier, puisque inférieure aux témoins T-1 ou T-3 mais significative et suffisante pour l'homme du métier pour les compositions C-1 et C-3 et supérieure aux témoins T-2 ou T-4 pour la composition C-2.

### TEST DE MOUILLABILITE

Le test de mouillabilité est conduit en suivant la norme ASTM D-1417-10. On mesure pour chaque composition adhésive la tension de surface exprimée en millinewtons par mètre (soit en dynes par centimètre). Plus la valeur de la tension de surface est élevée, moins la composition adhésive est susceptible de correctement s'étaler sur le matériau qu'elle est destinée à revêtir. A l'inverse, plus la valeur de tension de surface est faible, meilleure est la mouillabilité de la composition adhésive.

Une valeur supérieure à celle du test réalisé en utilisant la composition T-2, arbitrairement fixée à 100, indique un résultat amélioré, c'est-à-dire une mouillabilité supérieure à celle de la composition témoin. Les résultats des tests effectués sur les compositions adhésives sont résumés dans le tableau 1. La mention « NM » signifie que la mesure n'a pas été effectuée.

De manière surprenante, la mouillabilité est significativement améliorée pour les compositions C-1 et C-3 comparée à celles des compositions témoins T-2 et T-3. La mouillabilité de la composition C-2 est également significativement améliorée par rapport à celle de la composition témoin T-3.

### TEST DE SOLUBILISATION

On a également testé la solubilité de chaque composition adhésive selon le protocole suivant. Dans un premier temps, on a agité à une vitesse d'agitation donnée, la composition adhésive au moyen d'un agitateur classique de type à barreau aimanté. En l'absence de solubilisation de la composition adhésive à cette vitesse d'agitation et au moyen de cet agitateur classique, on a augmenté progressivement la vitesse d'agitation. Si, à la vitesse d'agitation maximale de l'agitateur classique, on n'observait pas de solubilisation de la composition adhésive, on a, dans un deuxième temps, agité à une vitesse d'agitation donnée, la composition adhésive au moyen d'un agitateur de type Ultra-Turrax.

On a indiqué dans le tableau 1 ci-dessous la nécessité d'utiliser un agitateur de type Ultra-Turrax ainsi que la vitesse d'agitation nécessaire à la solubilisation de la composition adhésive. Une vitesse d'agitation faible est indiquée par le signe « + ». Une vitesse d'agitation moyenne est indiquée par le signe « ++ ». Une vitesse d'agitation élevée est indiquée par le signe « +++ ».

Les compositions C-1 à C-3 sont plus faciles à solubiliser et ne nécessitent qu'une agitation faible pour leur dissolution dans l'eau alors qu'une agitation élevée est requise pour les compositions témoins T-3 ou T4 (pour les compositions témoins T-1 et T-2, le formaldéhyde est aisément soluble dans l'eau) pour éviter l'apparition de résidus.

En conclusion, les résultats de ces différents essais démontrent clairement que les compositions adhésives selon l'invention constituent une alternative fort intéressante à l'emploi des colles de l'état de la technique.

**Tableau 1**

| **Compositions adhésives** | **T-1** | **T-2** | **T-3** | **T-4** | **T-5** | **C-1** | **C-2** | **C-3** |
|---|---|---|---|---|---|---|---|---|
| Composé : | | | | | | | | |
| Formaldéhyde (1) | 0,9 | 0,7 | - | - | | - | - | |
| 1,4-benzènedicarboxaldéhyde (2) | - | - | 1,2 | 1 | | - | - | |
| 1,3-benzènedimethylol (3) | | | | | | | | 1,3 |
| Furfuraldéhyde (4) | | | | | 0.9 | | | |
| 5-(hydroxyméthyl)-furfural (5) | - | - | - | - | | 1,3 | 1,1 | |

| Polyphénol : | | | | | | | | |
|---|---|---|---|---|---|---|---|---|
| Résorcinol (6) | 1,7 | - | - | - | | - | - | |
| Phloroglucinol (7) | - | - | 1,4 | - | 1.7 | 1,3 | - | 1,3 |
| SRF 1524 (8) | - | 1,9 | - | 1,6 | | | 1,5 | |
| Hydroxyde de sodium (9) | 0.2 | 0.2 | 0.2 | 0.2 | 0.2 | 0.2 | 0.2 | 0,2 |

| Latex d'élastomères : | | | | | | | | |
|---|---|---|---|---|---|---|---|---|
| NR (10) | 6.4 | 6.4 | 6.4 | 6.4 | 6.4 | 6.4 | 6.4 | 6.4 |
| SBR (11) | 3.2 | 3.2 | 3.2 | 3.2 | 3.2 | 3.2 | 3.2 | 3.2 |
| VP-SBR (12) | 6.4 | 6.4 | 6.4 | 6.4 | 6.4 | 6.4 | 6.4 | 6.4 |
| Ammoniaque (13) | 0.5 | 0.5 | 0.5 | 0.5 | 0.5 | 0.5 | 0.5 | 0.5 |
| | | | | | | | | |
| Poids total d'extrait sec de composition adhésive | 19.3 | 19.3 | 19.3 | 19.3 | 19.3 | 19.3 | 19.3 | 19.3 |
| Poids d'eau | 80.7 | 80.7 | 80.7 | 80.7 | 80.7 | 80.7 | 80.7 | 80.7 |
| | | | | | | | | |

| **Tests d'adhésion** | | | | | | | | |
|---|---|---|---|---|---|---|---|---|
| Fₘₐₓ à 20 °C | 100 | 100 | 94 | 95 | 78 | 92 | 106 | 87 |
| Mouillabilité | NM | 100 | 79 | NM | 90 | 105 | 93 | 105 |
| Nécessité d'un mélangeur type Ultra-Turrax | Non | Non | Oui | Oui | Non | Non | Non | Non |
| Vitesse d'agitation | + | + | +++ | +++ | + | + | + | + |

| | | | | | | | | |
|---|---|---|---|---|---|---|---|---|
| 1) Formol (de la société Caldic ; dilué à 36%) ; 2) 1,4-benzènedicarboxaldéhyde (de la société ABCR ; de pureté 98%) ; 3) 1,3-benzènedimethylol (de la société Aldrish ; de pureté 99%) ; 4) Furfuraldéhyde ; 5) HMF ; 6) Résorcinol (de la société Sumitomo ; de pureté 99.5%) ; 7) Phloroglucinol (de la société Alfa Aesar ; de pureté 99%) ; 8) Résine précondensée SRF 1524 (de la société Schenectady ; dilué à 75%) ; 9) Hydroxyde de sodium (de la société Aldrich ; dilué à 30%) ; 10) Latex NR (« Trang Latex » de la société Bee tex ; dilué à 61% en poids) ; 11)Latex SBR (« Encord-201 » de la société Jubilant ; dilué à 41 % en poids) ; 12) Latex Vinylpyridine-styrène-butadiène («VP 106S» de la société Eliokem ; dilué à 41%); 13)Ammoniaque (de la société Aldrich ; diluée à 21%). | | | | | | | | |

## Revendications

1. Composition adhésive aqueuse, comportant A) une résine thermodurcissable et B) un latex d'élastomère insaturé, **caractérisée en ce que** la résine thermodurcissable est à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ; et/ou
A2') d'au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées.

2. Composition selon la revendication précédente, dans laquelle le composé aromatique A1 répond à la formule générale (II) : 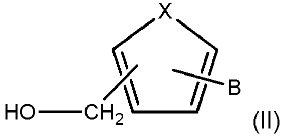 où B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle, de préférence le composé aromatique A1 répond à la formule générale (II'a1 ) ou (II'a2) :

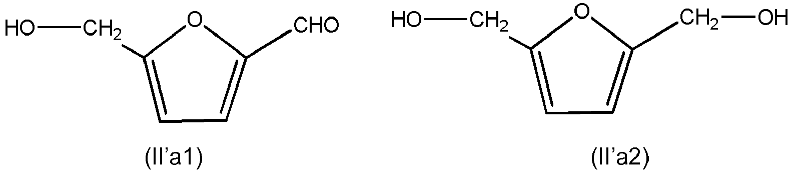

3. Composition selon l'une quelconque des revendications précédentes, dans laquelle le noyau aromatique du polyphénol aromatique satisfait au minimum l'une des caractéristiques suivantes :
- il est porteur de trois fonctions hydroxyle en position méta les unes par rapport aux autres ;
- les deux positions ortho de chaque fonction hydroxyle sont non substituées ;
- le reste du noyau aromatique du polyphénol aromatique est non substitué.

4. Composition selon l'une quelconque des revendications précédentes, dans laquelle le polyphénol aromatique comprend plusieurs noyaux aromatiques, avantageusement chaque noyau aromatique du polyphénol aromatique est un noyau benzénique, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

5. Composition selon la revendication précédente, dans laquelle au moins un des noyaux aromatiques du polyphénol aromatique est porteur de trois fonctions hydroxyle en position méta les unes par rapport aux autres.

6. Composition selon la revendication 4 ou 5, dans laquelle les deux positions ortho de chaque fonction hydroxyle d'au moins un noyau aromatique du polyphénol aromatique, avantageusement de chaque noyau aromatique du polyphénol aromatique, sont non substituées.

7. Composition selon l'une quelconque des revendications précédentes, dans laquelle le polyphénol aromatique est choisi dans le groupe constitué par le résorcinol, le phloroglucinol, le 2,2',4,4'-tétrahydroxydiphényl sulfide, la 2,2',4,4'-tétrahydroxybenzophenone, et les mélanges de ces composés, avantageusement le phloroglucinol.

8. Composition selon l'une quelconque des revendications précédentes, dans laquelle le polyphénol aromatique est une résine pré-condensée à base :
- d'au moins un polyphénol aromatique tel que défini à l'une quelconque des revendications précédentes, et
- à base d'au moins un composé susceptible de réagir avec ledit polyphénol aromatique choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

9. Composition selon la revendication 8, dans laquelle le composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle est choisi dans le groupe constitué par le 5-(hydroxyméthyl)-furfural, le 2,5-di(hydroxyméthyle)furane et les mélanges de ces composés.

10. Composition selon l'une quelconque des revendications précédentes, dans laquelle l'élastomère insaturé du latex est un élastomère diénique, choisi de préférence dans le groupe constitué par les polybutadiènes, les copolymères de butadiène, les polyisoprènes, les copolymères d'isoprène, les terpolymères vinylpyridine-styrène-butadiène et les mélanges de ces élastomères.

11. Composition selon l'une quelconque des revendications précédentes, dans laquelle la teneur en eau de la composition adhésive varie de 60 à 90% en poids, de préférence entre 60 et 85% en poids.

12. Solution adhésive aqueuse comprenant une résine thermodurcissable pré-condensée à base:
- A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

13. Matériau textile dont au moins une partie est revêtue d'une couche adhésive comportant une composition adhésive selon l'une quelconque des revendications 1 à 11.

14. Utilisation, pour le collage d'un matériau textile à un caoutchouc insaturé, d'une composition adhésive selon l'une quelconque des revendications 1 à 11 ou d'une solution adhésive selon la revendication 12.

15. Composite de caoutchouc renforcé d'un matériau textile selon la revendication 13.

## Patentansprüche

1. Wässrige Klebstoffzusammensetzung, umfassend A) ein wärmehärtbares Harz und B) einen Latex eines ungesättigten Elastomers, **dadurch gekennzeichnet, dass** das wärmehärtbare Harz auf
A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) mindestens einem aromatischen Polyphenol mit mindestens einem aromatischen Kern, der mindestens zwei Hydroxylfunktionen in meta-Position zueinander trägt, wobei die beiden ortho-Positionen zu mindestens einer der Hydroxylfunktionen unsubstituiert sind; und/oder
A2') mindestens einem aromatischen Monophenol mit mindestens einem sechsgliedrigen aromatischen Kern, der eine einzige Hydroxylfunktion trägt,
- wobei die beiden ortho-Positionen zur Hydroxylfunktion unsubstituiert sind oder
- wobei mindestens eine ortho-Position und die para-Position zur Hydroxylfunktion unsubstituiert sind;
basiert.

2. Zusammensetzung nach dem vorhergehenden Anspruch, wobei die aromatische Verbindung A1 der folgenden allgemeinen Formel (II) entspricht: 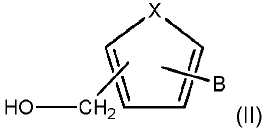 wobei B für CHO oder CH₂OH steht, X für O, NR₁, NO, S, SO, SO₂ oder SR₂R₃ steht, R₁ für Wasserstoff oder eine Alkyl-, Aryl-, Arylalkyl-, Alkylaryl- oder Cycloalkylgruppe steht, R₂, R₃ jeweils unabhängig voneinander für Wasserstoff oder eine Alkyl-, Aryl-, Aryl-, Arylalkyl-, Alkylaryl- oder Cycloalkylgruppe stehen, vorzugsweise die aromatische Verbindung A1 der folgenden allgemeinen Formel (II'a1) oder (II'a2) entspricht:

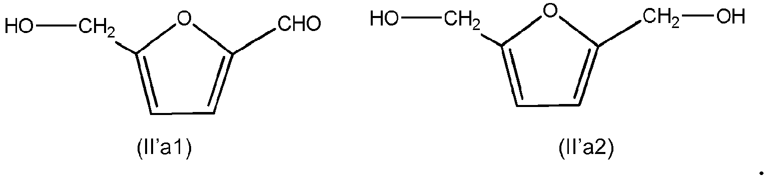

3. Zusammensetzung nach einem der vorhergehenden Ansprüche, wobei der aromatische Kern des aromatischen Polyphenols mindestens eines der folgenden Merkmale erfüllt:
- er trägt drei Hydroxylfunktionen in meta-Position zueinander;
- die beiden ortho-Positionen zu jeder Hydroxylfunktion sind unsubstituiert;
- der Rest des aromatischen Kerns des aromatischen Polyphenols ist unsubstituiert.

4. Zusammensetzung nach einem der vorhergehenden Ansprüche, wobei das aromatische Polyphenol mehrere aromatische Kerne umfasst, vorteilhafterweise jeder aromatische Kern des aromatischen Polyphenols ein Benzolkern ist, wobei mindestens zwei davon jeweils mindestens zwei Hydroxylfunktionen in meta-Position zueinander tragen, wobei die beiden ortho-Positionen zu mindestens einer der Hydroxylfunktionen mindestens eines aromatischen Kerns unsubstituiert sind.

5. Zusammensetzung nach dem vorhergehenden Anspruch, wobei mindestens einer der aromatischen Kerne des aromatischen Polyphenols drei Hydroxylfunktionen in meta-Position zueinander trägt.

6. Zusammensetzung nach Anspruch 4 oder 5, wobei die beiden ortho-Positionen zu jeder Hydroxylfunktion mindestens eines aromatischen Kerns des aromatischen Polyphenols, vorteilhafterweise jedes aromatischen Kerns des aromatischen Polyphenols, unsubstituiert sind.

7. Zusammensetzung nach einem der vorhergehenden Ansprüche, wobei das aromatische Polyphenol aus der Gruppe bestehend aus Resorcinol, Phloroglucinol, 2,2',4,4'-Tetrahydroxydiphenylsulfid, 2,2',4,4'-Tetrahydroxybenzophenon und Mischungen dieser Verbindungen, vorteilhafterweise Phloroglucinol, ausgewählt ist.

8. Zusammensetzung nach einem der vorhergehenden Ansprüche, wobei es sich bei dem aromatischen Polyphenol um ein vorkondensiertes Harz auf Basis von
- mindestens einem aromatischen Polyphenol gemäß einem der vorhergehenden Ansprüche und
- auf Basis mindestens einer Verbindung, die mit dem aromatischen Polyphenol reagieren kann, aus der Gruppe bestehend aus einer aromatischen Verbindung mit einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, Formaldehyd, Furfuraldehyd, 2,5-Furandicarboxaldehyd, 1,4-Benzoldicarboxaldehyd, 1,3-Benzoldicarboxaldehyd, 1,2-Benzoldicarboxaldehyd und Mischungen dieser Verbindungen
handelt.

9. Zusammensetzung nach Anspruch 8, wobei die aromatische Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, aus 5-(Hydroxymethyl)furfural, 2,5-Di(hydroxymethyl)furan und Mischungen dieser Verbindungen ausgewählt ist.

10. Zusammensetzung nach einem der vorhergehenden Ansprüche, wobei es sich bei dem ungesättigten Elastomer des Latex um ein Dienelastomer handelt, das vorzugsweise aus der Gruppe bestehend aus Polybutadienen, Butadien-Copolymeren, Polyisoprenen, Isopren-Copolymeren, Vinylpyridin-Styrolen-Butadien-Terpolymeren und Mischungen dieser Elastomere ausgewählt ist.

11. Zusammensetzung nach einem der vorhergehenden Ansprüche, wobei der Wassergehalt der Klebstoffzusammensetzung von 60 bis 90 Gew.-% und vorzugsweise zwischen 60 und 85 Gew.-% variiert.

12. Wässrige Klebstofflösung, umfassend ein vorkondensiertes wärmehärtendes Harz auf Basis von
- A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
- A2) mindestens einem aromatischen Polyphenol mit mindestens einem aromatischen Kern, der mindestens zwei Hydroxylfunktionen in meta-Position zueinander trägt, wobei die beiden ortho-Positionen zu mindestens einer der Hydroxylfunktionen unsubstituiert sind.

13. Textilmaterial, das mindestens teilweise mit einer Klebstoffschicht, die eine Klebstoffzusammensetzung nach einem der Ansprüche 1 bis 11 umfasst, beschichtet ist.

14. Verwendung einer Klebstoffzusammensetzung nach einem der Ansprüche 1 bis 11 oder einer Klebstofflösung nach Anspruch 12 zum Verkleben eines Textilmaterials mit einem ungesättigten Kautschuk.

15. Kautschukverbundwerkstoff, der mit einem Textilmaterial nach Anspruch 13 verstärkt ist.

## Claims

1. Aqueous adhesive composition comprising A) a thermosetting resin and B) an unsaturated elastomer latex, **characterized in that** the thermosetting resin is based on:
A1) at least one aromatic compound comprising at least one aromatic ring bearing at least two functions, one of these functions being a hydroxymethyl function and the other being an aldehyde function or a hydroxymethyl function; and
A2) at least one aromatic polyphenol comprising at least one aromatic ring bearing at least two hydroxyl functions in the meta position relative to one another, the two positions ortho to at least one of the hydroxyl functions being unsubstituted; and/or
A2') at least one aromatic monophenol comprising at least one six-membered aromatic ring bearing a single hydroxyl function,
- the two positions ortho to the hydroxyl function being unsubstituted, or
- at least one position ortho to and the position para to the hydroxyl function being unsubstituted.

2. Composition according to the preceding claim, wherein the aromatic compound A1 corresponds to the general formula (II): 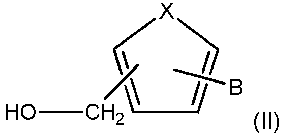 in which B represents CHO or CH₂OH, X represents O, NR₁, NO, S, SO, SO₂, SR₂R₃, R₁ represents a hydrogen, an alkyl, aryl, arylalkyl, alkylaryl or cycloalkyl group, R₂, R₃ each represent, independently of one another, a hydrogen, an alkyl, aryl, arylalkyl, alkylaryl or cycloalkyl group, preferably the aromatic compound A1 corresponds to the general formula (II'a1) or (II'a2):

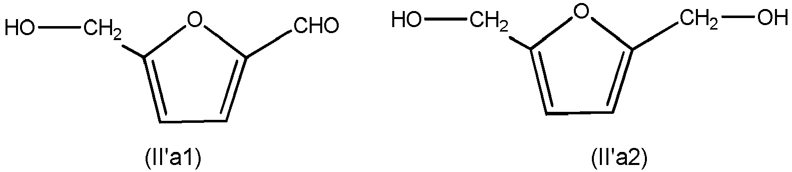

3. Composition according to any one of the preceding claims, wherein the aromatic ring of the aromatic polyphenol meets at least one of the following features:
- It bears three hydroxyl functions in the meta position relative to one another;
- the two positions ortho to each hydroxyl function on the aromatic ring of the aromatic polyphenol are unsubstituted;
- the remainder of the aromatic ring of the aromatic polyphenol is unsubstituted.

4. Composition according to any one of the preceding claims, wherein the aromatic polyphenol comprises several aromatic rings, at least two of these each bearing at least two hydroxyl functions in the meta position relative to one another, the two positions ortho to at least one of the hydroxyl functions of at least one aromatic ring being unsubstituted.

5. Composition according to the preceding claim, wherein at least one of the aromatic rings of the aromatic polyphenol bears three hydroxyl functions in the meta position relative to one another.

6. Composition according to Claim 4 or 5, wherein the two positions ortho to each hydroxyl function of at least one aromatic ring of the aromatic polyphenol are unsubstituted, advantageously of each aromatic ring of the aromatic polyphenol are unsubstituted.

7. Composition according to any one of the preceding claims, wherein the aromatic polyphenol is selected from the group consisting of resorcinol, phloroglucinol, 2,2',4,4'-tetrahydroxydiphenyl sulfide, 2,2',4,4'-tetrahydroxybenzophenone and the mixtures of these compounds, advantageously phloroglucinol.

8. Composition according to any one of the preceding claims, wherein the aromatic polyphenol is a pre-condensed resin based:
- on at least one aromatic polyphenol as defined in any one of the preceding claims, and
- based on at least one compound capable of reacting with said aromatic polyphenol is selected from the group consisting of an aromatic compound comprising an aromatic ring bearing at least two functions, one of these functions being a hydroxymethyl function, the other being an aldehyde function or a hydroxymethyl function, formaldehyde, furfuraldehyde, 2,5-furandicarboxaldehyde, 1,4-benzenedicarboxaldehyde, 1,3-benzenedicarboxaldehyde, 1,2-benzenedicarboxaldehyde and mixtures of these compounds.

9. Composition according to Claim 8, wherein the aromatic compound comprising an aromatic ring bearing at least two functions, one of these functions being a hydroxymethyl function, the other being an aldehyde function or a hydroxymethyl function, is selected from the group consisting of 5-(hydroxymethyl)furfural, 2,5-di(hydroxymethyl)furan and mixtures of these compounds.

10. Composition according to any one of the preceding claims, wherein the unsaturated elastomer of the latex is a diene elastomer, preferably selected from the group consisting of polybutadienes, butadiene copolymers, polyisoprenes, isoprene copolymers, vinylpyridine/styrene/butadiene terpolymers and the mixtures of these elastomers.

11. Composition according to any one of the preceding claims, wherein the water content of the adhesive composition varies from 60 to 90% by weight, preferably between 60 and 85% by weight.

12. Aqueous adhesive solution comprising a pre-condensed thermosetting resin based on:
- A1) at least one aromatic compound comprising at least one aromatic ring bearing at least two functions, one of these functions being a hydroxymethyl function and the other being an aldehyde function or a hydroxymethyl function; and
- A2) at least one aromatic polyphenol comprising at least one aromatic ring bearing at least two hydroxyl functions in the meta position relative to one another, the two positions ortho to at least one of the hydroxyl functions being unsubstituted.

13. Textile material, at least a portion of which is coated with an adhesive layer comprising an adhesive composition according to any one of Claims 1 to 11.

14. Use, for the adhesive bonding of a textile material to an unsaturated rubber, of an adhesive composition according to any one of Claims 1 to 11 or of an adhesive solution according to Claim 12.

15. Rubber composite reinforced with a textile material according to Claim 13.
